# EUROPÄISCHE PATENTSCHRIFT

(11) **EP 1 080 991 B1**
(45) Veröffentlichungstag und Bekanntmachung des Hinweises auf die Patenterteilung: **19.11.2008**
(21) Anmeldenummer: 00118699.8
(22) Anmeldetag: 30.08.2000
(51) Int. Cl.: B60Q 1/26, F21S 8/10

(54) **Leuchte für Fahrzeuge**
Vehicle lights
Feux pour véhicule

(30) Priorität: 01.09.1999 DE 19941524
(43) Veröffentlichungstag der Anmeldung: 07.03.2001
(73) Patentinhaber: Hella KGaA Hueck & Co., 59552 Lippstadt (DE)
(72) Erfinder: Pfarr, Susanne, 59558 Lippstadt (DE); Weber, Thomas, Dr., 33106 Paderborn (DE); Pohl, Reiner, 59558 Lippstadt (DE); Weigelt, Beate, 59556 Lippstadt (DE)

(56) Entgegenhaltungen:
- GB-A- 2 275 993
- US-A- 5 436 809

## Beschreibung

Die Erfindung betrifft eine Leuchte für Fahrzeuge, insbesondere Rückleuchte, mit einer Mehrzahl von jeweils mindestens eine Lichtquelle aufweisenden Kammern und einem Träger, wobei die Kammern (14) jeweils von einer Leuchteinheit (3) gebildet werden und in Abständen zueinander an dem Träger (2) anordenbar sind und der Träger (2) als ein Zierrahmen mit einer Leuchtenfläche (4) ausgebildet ist, die eine Mehrzahl von Öffnungen (5, 6, 7, 8) aufweist, denen auf der Rückseite (10) jeweils die zugehörige Leuchteinheit (3) vorlagerbar ist, dadurch gekennzeichnet, dass die Leuchteinheiten (3) lösbar mit dem Träger (2) verbunden sind.

Aus der EP 0 795 718 A1 ist eine Leuchte für Fahrzeuge bekannt, die eine Mehrzahl von Kammern aufweist, in denen jeweils eine Lichtquelle angeordnet ist. Die Kammern sind in einem gemeinsamen topfförmigen Gehäuse angeordnet, dessen Öffnung durch eine Abdeckscheibe abgedeckt wird.

Nachteilig bei der bekannten Leuchte ist, dass durch die starre Verbindung der Kammern, insbesondere durch die fest vorgegebene Ausbildung der Reflektoren, die Leuchtfunktionen bzw. die Aufteilung der Leuchtfunktionen innerhalb des Gehäuses bzw. des dazugehörigen Trägers festgelegt sind.

Aus der EP 0 238 008 B1 ist eine Scheinwerfereinheit bzw. Leuchte für Kraftfahrzeuge bekannt, die einen Träger mit einer Mehrzahl von in einer Reihe nebeneinanderliegenden Kammern aufweist. In die Kammern sind Leuchtmodule, die im wesentlichen aus Reflektoren mit einer Lichtquelle und einer vorgelagerten Abdeckscheibe bestehen, einsetzbar.

Nachteilig bei der bekannten Scheinwerfereinheit ist, dass durch die fest vorgegebene Aufteilung der Kammern eine Variation der Positionierung der einzelnen Leuchtmodule und eine Variation des Erscheinungsbildes der Leuchte nur schwer möglich ist.

Aus der US 5 436 809 ist gemäß dem Oberbegriff des Anspruchs 1 eine Fahrzeugleuchte mit einer Mehrzahl von Lichtquellen gemäß dem Oberbegriff des Anspruchs 1 bekannt gemäß dem Oberbegriff des Anspruchs 1, die mit einem Träger Kammern bilden, wobei die Lichtquellen in Abständen zueinander an dem Träger anordenbar sind. Der Träger ist als ein Zierelement mit einer Leuchtenfläche ausgebildet, die eine Mehrzahl von Öffnungen aufweist, denen auf der Rückseite jeweils die zugehörige Lichtquelle vorlagerbar ist.

Auch bei dieser Fahrzeugleuchte erweist sich als nachtteilig, dass eine starre Verbindung zwischen den Lichtquellen und dem Träger gegeben ist, wodurch sich eine fest vorgegebene Aufteilung der Kammern ergibt und eine Variation der Positionierung der einzelnen Leuchtmodule und eine Variation des Erscheinungsbildes der Leuchte nur schwer möglich ist.

Aufgabe der vorliegenden Erfindung ist es daher, die bekannten Leuchten so zu verbessern, dass das Erscheinungsbild der Leuchten, insbesondere bei einer Verwendung als Rückleuchte, leicht zu variieren und insbesondere die Position der Kammern veränderbar ist.

Diese Aufgabe wird erfindungsgemäß in Verbindung mit dem Oberbegriff des Anspruches 1 dadurch gelöst, dass die Kammern jeweils von einer Leuchteinheit gebildet werden und in Abständen zueinander an dem Träger anordenbar sind und dass der Träger als ein Zierrahmen mit einer Leuchtenfläche ausgebildet ist, die eine Mehrzahl von Öffnungen aufweist, denen auf der Rückseite jeweils die zugehörige Leuchteinheit vorlagerbar ist.

Dadurch, dass die Kammern jeweils von einer Leuchteinheit gebildet werden und nicht mehr fester Bestandteil des Trägers sind, lässt sich die Position der Kammern und damit auch der Leuchteinheiten relativ einfach variieren. Durch die Gestaltung des Trägers als Zierrahmen mit einer relativ großen, in die Fahrzeugkarosserie leicht integrierbaren Leuchtenfläche, lässt sich der Variationsspielraum zusätzlich vergrößern. Die Leuchte kann dabei eine relativ geringe Einbautiefe aufweisen, was die Integrierbarkeit in die Fahrzeugkarosserie vereinfacht. Das Erscheinungsbild der einzelnen Kammern kann individuell gestaltet werden.

Gemäß einer bevorzugten Ausführungsform der Erfindung sind die Leuchteinheiten lösbar mit dem Träger verbunden. An dem Träger sind dabei Aufnahmen zur Aufnahme der Leuchteinheiten angeordnet.

Durch die lösbare Verbindung ist eine Variation des Erscheinungsbildes zudem auch im nachhinein ohne Austausch der kompletten Rückleuchte möglich. Damit kann auch der Endkunde Einfluss auf das Erscheinungsbild nehmen. Durch die Aufnahmen zur Aufnahme der Leuchteinheiten ist eine Montage bzw. Demontage relativ einfach möglich.

Nach einer weiteren bevorzugten Ausführungsform der Erfindung weisen die Leuchteinheiten eine Gehäusewandung auf, an derem dem Träger abgewandten hinteren Ende ein Reflektor angeordnet ist. An dem dem hinteren Ende abgewandten vorderen Ende der Gehäusewandung ist eine austauschbare transparente Lichtscheibe angeordnet.

Durch die Anordnung von Reflektor und Lichtscheibe an einer Gehäusewandung lässt sich bei leichter Austauschbarkeit eine relativ große Gestaltungsvielfalt erzielen. Die Lichtscheiben können dabei transparent oder farbig ausgebildet sein. Sowohl die Lichtscheiben als auch die Reflektoren können mit Optiken profiliert ausgebildet sein.

Gemäß einer weiteren bevorzugten Ausführungsform der Erfindung ist die Gehäusewandung als ein runder Tubus ausgebildet, dessen vorderes Ende in die Aufnahme einsteckbar ist. Die Aufnahme ist dabei als ein Aufnahmering ausgebildet, der an der Rückseite der Leuchtenfläche der Öffnung vorgelagert ist.

Durch die Ausbildung der Gehäusewandung als runder Tubus lassen sich die Leuchteinheiten relativ einfach und kostengünstig herstellen. Tubus und Reflektor können aus einem Teil bestehen, fest miteinander verbunden sein und austauschbar ineinandergesteckt sein. Der Tubus und der Aufnahmering können fest, zum Beispiel durch Kleben, oder auch lösbar miteinander verbunden sein.

Nach einer weiteren bevorzugten Ausführungsform der Erfindung ist die Leuchtenfläche durch eine transparente Abschlussscheibe abdeckbar. Die optisch relevanten austauschbaren Komponenten (Reflektoren und Lichtscheiben) können für unterschiedliche Produkte verwendet werden und können daher in relativ großen Stückzahlen kostengünstig hergestellt werden.

Der Träger kann durch unterschiedliche Materialien und Oberflächenbeschaffenheiten variiert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

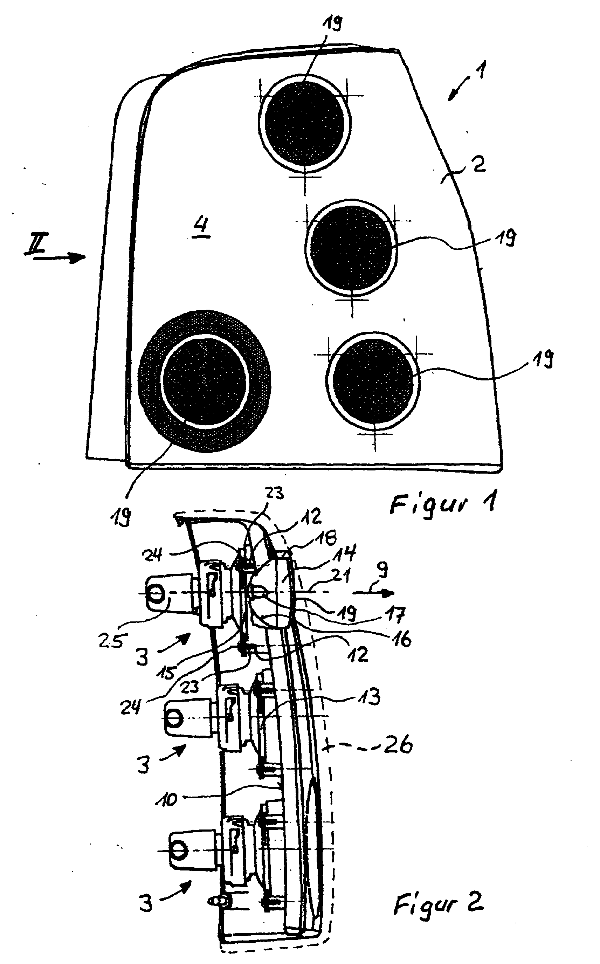

- Figur 1:: Eine Vorderansicht einer Leuchte für Fahrzeuge,
- Figur 2:: eine Seitenansicht auf die Leuchte von Figur 1 aus Richtung II,

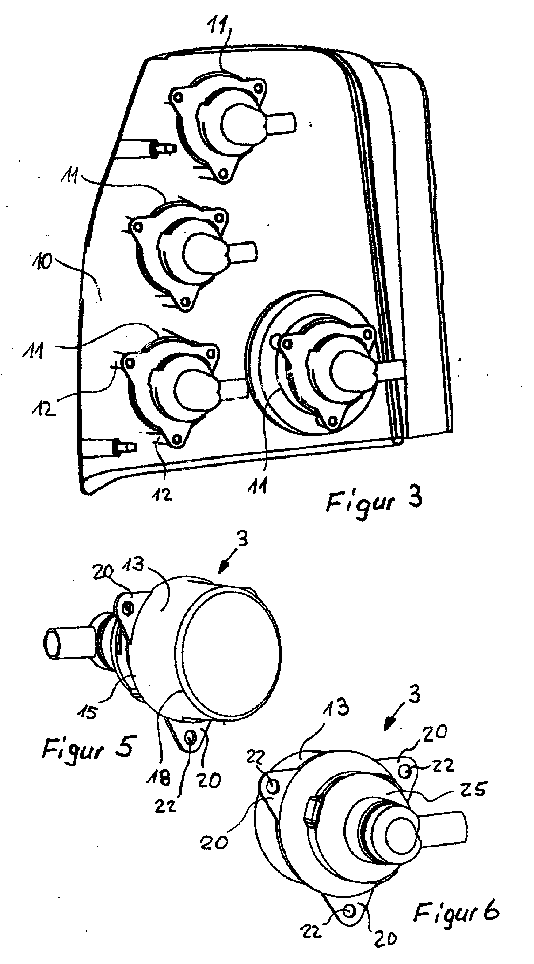

- Figur 3:: eine Rückansicht der Leuchte von Figur 1,

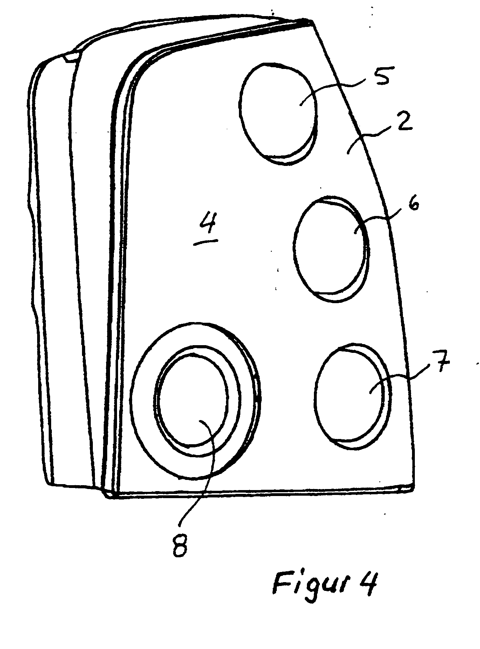

- Figur 4:: eine Vorderansicht eines Trägers ohne Leuchteinheiten in räumlicher Darstellung,
- Figur 5:: eine Vorderansicht einer Leuchteinheit in räumlicher Darstellung und
- Figur 6:: eine Rückansicht der Leuchteinheit von Figur 5 in räumlicher Darstellung.

Eine Leuchte 1 besteht im wesentlichen aus einem Träger 2 und Leuchteinheiten 3.

Der Träger 2 ist für die Leuchte 1 Gehäuse, Tragrahmen und Zierrahmen zugleich. Hierzu weist der Träger 2 eine Leuchtenfläche 4 auf, die als Zierrahmen in die nicht dargestellten Karosserieteile integrierbar ist. Die Leuchtenfläche 4 weist beispielsweise eine erste Öffnung 5, eine zweite Öffnung 6, eine dritte Öffnung 7 und eine vierte Öffnung 8 auf. Die Öffnungen 5, 6, 7, 8 sind auf der der Abstrahlrichtung 9 abgewandten Rückseite 10 der Leuchtenfläche 4 von Aufnahmen 11, die als Aufnahmeringe ausgebildet sind, umgeben. Konzentrisch zu jeder Aufnahme 11 sind jeweils drei Haltesäulen 12 senkrecht zur Rückseite 10 angeordnet. Die Leuchtenfläche 4 kann von einer transparenten Abschlussscheibe 26 abgedeckt werden. Die Abschlussscheibe 26 ist dabei spritzwasserdicht mit der Leuchtenfläche 4 verbindbar.

Die notwendige Steifigkeit des Trägers 2 bzw. der Leuchtenfläche 4 wird durch die Befestigung der Leuchteinheiten 3 und gegebenenfalls durch weitere Einbauelemente erzielt. Es ist aber auch möglich, den Träger 2 mit Stützrippen zu versehen. Der Träger 2 kann sowohl als Kunststoffspritzteil, Schaumteil oder Tiefziehteil einteilig oder mehrteilig ausgeführt werden.

Die Leuchteinheiten 3 bestehen im wesentlichen aus einer Gehäusewandung 13, die als ein runder Tubus ausgebildet ist und eine Kammer 14 bildet. An ihrem der Rückseite 10 der Leuchtenfläche 4 abgewandten hinteren Ende 15 der Gehäusewandung 13 ist ein Reflektor 16 angeordnet. Der Reflektor 16 umgibt eine Lichtquelle 17, deren Licht er auf die ihm zugeordnete Öffnung 5, 6, 7, 8 projiziert. An dem dem hinteren Ende 15 abgewandten vorderen Ende 18 der Gehäusewandung 13 ist eine transparente Lichtscheibe 19 angeordnet. Die transparenten Lichtscheiben 19 können farblos (Rückfahrscheinwerfer) oder farbig (z. B. rot für Rückleuchte/ Bremsleuchte/Nebelschlussleuchte und gelb für Blinkleuchte) ausgebildet sein. Der Reflektor 16 und/oder die Lichtscheiben 19 können mit Optiken profiliert sein. Die Optiken können dabei nicht weiter dargestellte radiale und/oder konzentrische Begrenzungslinien besitzen.

Die Gehäusewandung 13 weist an ihrem Umfang drei radial angeordnete Halterungen 20 auf, die in Richtung der Längsachse 21 der Leuchteinheit 3 jeweils eine Befestigungsbohrung 22 aufweisen.

Zur Montage wird am vorderen Ende 18 der Gehäusewandung 13 die Lichtscheibe 19 und am hinteren Ende 15 der Reflektor 16 eingesetzt. Der Tubus bzw. die Gehäusewandung 13 wird mit ihrem vorderen Ende 18 in die Aufnahme 11 bzw. in die ihr zugeordnete Öffnung 5, 6, 7 oder 8 eingesetzt, so dass die Halterungen 20 auf den freien Enden 23 der Haltesäulen 12 aufsitzen und über Schrauben 24 mit diesen verschraubt werden können. Die Lichtquelle 17 kann in üblicher Weise von rückwärts in den Reflektor 16 eingesetzt und verriegelt werden. Die Kontaktierung und Verriegelung kann dabei über einen üblichen Anschlußstecker 25 erfolgen. Der Träger 2 bzw. die Leuchte 1 wird fahrzeugseitig an den nicht dargestellten vorhandenen Karosseriebefestigungspunkten verschraubt.

## Patentansprüche

1. Leuchte für Fahrzeuge, insbesondere Rückleuchte, mit einer Mehrzah! von jeweils mindestens eine Lichtquelle aufweisenden Kammern und einem Träger, wobei die Kammern (14) jeweils von einer Leuchteinheit (3) gebildet werden und in Abständen zueinander an dem Träger (2) angeordnet sind und der Träger (2) als ein Zierrahmen mit einer Leuchtenfläche (4) ausgebildet ist, die eine Mehrzahl von Öffnungen (5, 6, 7, 8) aufweist, denen auf der Rückseite (10) jeweils die zugehörige Leuchteinheit (3) vorgelagert ist,
**dadurch gekennzeichnet, dass** die Leuchteinheiten über schrauben (3) lösbar mit dem Träger (2) verbunden sind.

2. Leuchte nach Anspruch 1, **dadurch gekennzeichnet, dass** an dem Träger (2) Aufnahmen (11) zur Aufnahme der Leuchteinheiten (3) angeordnet sind.

3. Leuchte nach einem der Ansprüche 1 bis 2, **dadurch gekennzeichnet, dass** die Leuchteinheiten (3) eine Gehäusewandung (13) aufweisen, an derem dem Träger (2) abgewandten hinteren Ende (15) ein Reflektor (16) angeordnet ist.

4. Leuchte nach Anspruch 3, **dadurch gekennzeichnet, dass** an dem dem hinteren Ende (15) abgewandten vorderen Ende (18) der Gehäusewandung (13) eine austauschbare transparente Lichtscheibe (19) angeordnet ist.

5. Leuchte nach Anspruch 4, **dadurch gekennzeichnet, dass** die Lichtscheibe (19) farbig ausgebildet ist.

6. Leuchte nach Anspruch 4 oder 5, **dadurch gekennzeichnet, dass** die Lichtscheibe (19) als mit Optiken profilierte Lichtscheibe ausgebildet ist.

7. Leuchte nach einem der Ansprüche 3 bis 6, **dadurch gekennzeichnet, dass** der Reflektor (16) als ein mit Optiken profilierter Reflektor ausgebildet ist.

8. Leuchte nach einem der Ansprüche 3 bis 7, **dadurch gekennzeichnet, dass** die Gehäusewandung (13) als ein runder Tubus ausgebildet ist, dessen vorderes Ende (18) in die Aufnahme (11) einsteckbar ist, die als ein Aufnahmering ausgebildet ist, der an der Rückseite (10) der Leuchtenfläche (4) der Öffnung (5, 6, 7, 8) vorgelagert ist.

9. Leuchte nach einem der Ansprüche 1 bis 8, **dadurch gekennzeichnet, dass** die Leuchtenfläche (4) durch eine transparente Abschlußscheibe (26) abdeckbar ist.

## Claims

1. Lamp for vehicles, specifically a tail lamp, comprising a carrier carrying a plurality of chambers each of which has at least one light source, wherein each of the chambers (14) consists of a lighting unit (3), wherein the lighting units (3) are spaced out along the carrier (2), and wherein the carrier (2) is a bezel with a lamp mounting plate (4) which has a plurality of openings (5, 6, 7, 8) at the rear side (10) of each of which resides one of the lighting units (3), **characterized in that** the lighting units are connected to and can be detached from the carrier (2) by screws (3).

2. Lamp of claim 1, **characterized in that** the carrier (2) has seats (11) for the lighting units (3).

3. Lamp of claims 1 to 2, **characterized in that** each of the lighting units (3) has a housing wall (13) carrying a reflector (16) at its rear end (15) that faces away from the carrier (2).

4. Lamp of claim 3, **characterized in that** a replaceable, transparent lens (19) is attached to the front end (18) of each of the housing walls (13) that faces away from the rear end (15).

5. Lamp of claim 4, **characterized in that** the lens (19) is a colored lens.

6. Lamp of claim 4 or 5, **characterized in that** the lens (19) has a patterned surface.

7. Lamp of claims 3 to 6, **characterized in that** the reflector (16) has a patterned surface.

8. Lamp of claims 3 to 7, **characterized in that** the housing wall (13) is shaped like a round tube body whose front end (18) can be pushed into the seat (11) which is designed as a retaining ring residing at the rear side (10) of the lamp mounting plate (4) and around the openings (5, 6, 7, 8).

9. Lamp of claims 1 to 8, **characterized in that** the lamp mounting plate (4) can be covered with a transparent cover lens (26).

## Revendications

1. Feu pour véhicules, feu arrière notamment, avec une multitude de chambres comportant respectivement au moins une source de lumière et un support, les chambres (14) étant respectivement formées par une unité d'éclairage (3) et étant disposées à des intervalles définis entre elles sur le support (2) et le support (2) étant formé en tant qu'enjoliveur décoratif avec une surface d'éclairage (4) présentant une multitude d'ouvertures (5, 6, 7, 8) sur lesquelles, à l'arrière, l'unité d'éclairage (3) correspondante est respectivement en saillie,
**caractérisé en ce que** les unités d'éclairage sont fixées de manière détachable avec le support (2) par des vis.

2. Feu selon la revendication 1, **caractérisé en ce que** le support (2) comporte des logements (11) destinés à recevoir les unités d'éclairage (3).

3. Feu selon l'une des revendications 1 à 2, **caractérisé en ce que** les unités d'éclairage (3) présentent une paroi de boîtier sur laquelle se trouve un réflecteur (16) à l'extrémité arrière non dirigée vers le support (2).

4. Feu selon la revendication 3, **caractérisé en ce qu'**un disperseur (19) transparent échangeable se trouve sur l'extrémité avant (18) non dirigée vers l'extrémité arrière (15) de la paroi du boîtier (13).

5. Feu selon la revendication 4, **caractérisé en ce que** le disperseur (19) est de couleur.

6. Feu selon l'une des revendications 4 ou 5, **caractérisé en ce que** le disperseur (19) est formé en tant que disperseur profilé avec des optiques.

7. Feu selon l'une des revendications 3 à 6, **caractérisé en ce que** le réflecteur (16) est formé en tant que réflecteur profilé avec des optiques.

8. Feu selon l'une des revendications 3 à 7, **caractérisé en ce que l**a paroi du boîtier (13) est formée en tant que tube rond dont l'extrémité avant (18) est emboîtable dans le logement (11) formé en tant qu'anneau de logement qui est en saillie de l'ouverture (5, 6, 7, 8) à l'arrière (10) de la surface d'éclairage (4).

9. Feu selon l'une des revendications 1 à 8, **caractérisé en ce que** la surface d'éclairage (4) peut être recouverte par une glace externe (26) transparente.
